# EUROPEAN PATENT APPLICATION

(11) **EP 4 559 696 A1**
(43) Date of publication of application: **28.05.2025**
(21) Application number: 24193045.2
(22) Date of filing: 06.08.2024
(51) Int. Cl.: B60C 1/00, C08L 9/00, C08L 9/06, C08K 3/22, C08K 5/39

(54) **TIRE TREAD RUBBER COMPOSITION WITH IMPROVED WET BRAKING, WEAR AND SNOW BRAKING PERFORMANCES**

(30) Priority: 22.11.2023 KR 20230163145
(71) Applicant: Kumho Tire Co., Inc., Gwangju 62392 (KR)
(72) Inventor: Maeng, Jin Oh, 17067 Gyeonggi-do (KR); Park, Donghwan, 17076 Gyeonggi-do (KR); Lee, Dae Woo, 17076 Gyeonggi-do (KR)
(74) Representative: Hauck Patentanwaltspartnerschaft mbB

(57) **Abstract**

The present invention provides a tire tread rubber composition with improved braking performance on wet road surfaces while maintaining snow braking performance in hot-summer or cold-winter area. The tire tread rubber composition may include SBR having excellent low-temperature properties and a hydrogenated hydrocarbon resin to improve wet braking, snow braking and wear performances, and a specific vulcanizing agent to supplement wear/RR performances.

## Description

### [CROSS REFERENCE TO RELATED APPLICATIONS]

This application claims the benefit of Korean Patent Application No. 10-2023-0163145 filed on November 22, 2023, the entirety of which is incorporated by reference herein.

### [BACKGROUND OF THE INVENTION]

### 1. Field of the Invention

The present invention relates to a tire tread rubber composition with improved wet braking, wear and snow braking performances compared to existing tire rubber compositions, and more specifically, to a tire tread rubber composition which includes styrene-butadiene rubber (SBR) having excellent low-temperature properties and a hydrogenated hydrocarbon resin to improve wet braking, snow braking and wear performances, and a specific vulcanizing agent to supplement wear/rolling resistance (RR) performances.

### 2. Description of the Related Art

Recently, as the demand for electric vehicles (EVs) has been rapidly increased, new techniques for tire rubber compositions that simultaneously consider consumer safety and tire performance are required in consideration of tires for an EV vehicle with high load capacity and high output.

In order to overcome trade-off between respective performances, for example, wet performance is a trade-off with snow and wear performances, thus simultaneously improving all the performances is a current challenge that is difficult to overcome by the conventional techniques. By applying the above technique, it is possible to implement the best tire rubber composition in which wet, wear and snow performances are dramatically improved, while RR performance can also be maintained.

For example, Korean Patent Laid-Open Publication No. 10-2005-0051006 discloses a technique of kneading 100 parts by weight ("wt. parts") of SBR rubber with 50 parts by weight of silica and 30 wt. parts of aluminum hydroxide in order to simultaneously improve fuel efficiency and wet performances on wet road surfaces. However, braking performance, wear resistance, and process workability were insufficient due to limitations in the rubber composition, there are limitations in practical application thereof.

Korean Patent Laid-Open Publication No. 10-2016-0048406 discloses a technique of adding 10 to 20 wt. parts of aluminum hydroxide and 50 to 60 wt. parts of silica to a rubber component including 60 to 80 wt. parts of SBR rubber, 5 to 20 wt. parts of butyl rubber, and 5 to 20 wt. parts of natural rubber in order to improve braking and fuel efficiency performances. However, there are limitations in actual improvement of the wet/wear performances due to limitations such as a limitation in terms of rubber ratio and total content of silica and aluminum hydroxide.

In addition, Korean Patent Laid-Open Publication No. 10-2023-0027573 discloses a tire tread rubber composition including raw material rubber and a hydrocarbon resin, which is a rubber composition including a tread rubber composition containing 40 to 80 wt. parts of a hydrocarbon resin and a vulcanizing agent. However, since the above patent is a technique that does not use liquid butadiene and aluminum hydroxide, there are technical limitations in improving wet performance and snow performance.

### [Prior Art Document]

### [Patent Document]

(Patent Document 1) Korean Patent Laid-Open Publication No. 10-2005-0051006
(Patent Document 2) Korean Patent Laid-Open Publication No. 10-2016-0048406
(Patent Document 3) Korean Patent Laid-Open Publication No. 10-2023-0027573

### [SUMMARY OF THE INVENTION]

In consideration of the above-mentioned circumstances, it is an object of the present invention to provide a tire tread rubber composition which may dramatically improve wet performance, wear performance and snow performance, while improved fuel efficiency performance can also be maintained.

To achieve the above object, according to an aspect of the present invention, there is provided a tire tread rubber composition including 10 to 60 parts by weight ("wt. parts") of liquid polybutadiene, 10 to 50 wt. parts of aluminum hydroxide, and 0.5 to 4.0 wt. parts of a vulcanizing agent based on 100 wt. parts of the raw material rubber. If the liquid polybutadiene is used in less than 10 wt. parts, the effect to be obtained is minimal, and if it is used in more than 60 wt. parts, wet performance may be deteriorated. In addition, if 10 wt. parts of aluminum hydroxide is used, the effect to be obtained is minimal, and if it is used in more than 50 wt. parts, wear performance may be rapidly decreased. In addition, the present invention also provides a tire tread rubber composition including a rubber composition to be described below.

In order to simultaneously improve wet performance, wear performance and snow performance, a weight ratio of the liquid polybutadiene to the aluminum hydroxide is limited to a range of 1:0.25 to 1:3.0. If the ratio of the aluminum hydroxide to the liquid polybutadiene is less than 0.25, wear and snow performances are increased, but wet performance is decreased. If the ratio of the used aluminum hydroxide is 3.0 times or more, wet performance and snow performances are improved, but wear performance is decreased.

The vulcanizing agent may be included in an amount of 0.5 to 4.0 wt. parts based on 100 wt. parts of the raw material rubber. If it is included less than the above range, the effect of improving RR/wear performances are minimal, and if it is included in more than the above range, problem entailed in scorch time stability may occur. The vulcanizing agent is preferably 1,6-bis(n,n-dibenzylthiocarbamoyldithio)hexane represented by Formula 1 below, but it is not limited thereto:
To achieve the above object, according to another aspect of the present invention, there is provided a tire rubber composition which may be applied to tires through an optimal mixing of the raw material rubber, liquid polybutadiene, aluminum hydroxide and vulcanizing agent thus to dramatically improve the wet/wear/snow performances.

In addition, the present invention provides a tire including the above-described rubber composition.

In the tire rubber composition of the present invention, the raw material rubber may be natural rubber (NR), synthetic rubber or a mixture thereof.

In the tire tread rubber composition of the present invention, the type of the synthetic rubber is not particularly limited, and may include, for example, styrene-butadiene rubber, butadiene rubber, butyl rubber, emulsion polymerized styrene-butadiene rubber (E-SBR), solution polymerized styrene-butadiene rubber (S-SBR), epichlorohydrin rubber, nitrile rubber, hydrogenated nitrile rubber, brominated polyisobutyl isoprene-co-paramethyl styrene (BIMS) rubber, urethane rubber, fluorine rubber, silicone rubber, styrene-ethylene-butadienestyrene copolymer rubber, ethylene propylene rubber, ethylene propylene diene monomer rubber, hypalon rubber, chloroprene rubber, ethylene vinyl acetate rubber, and acrylic rubber, etc.

In the tire tread rubber composition of the present invention, the raw material rubber may include 50 to 100% by weight ("wt. %") of styrene-butadiene rubber containing 10 to 30 wt. % of styrene and 1 to 30 wt. % of vinyl based on the total weight of the raw material rubber, and 0 to 50 wt. % of butadiene rubber or natural rubber based on the total weight of the raw material rubber. In addition, the styrene-butadiene rubber has a glass transition temperature of -80 to -40 °C.

The liquid polybutadiene may have a molecular weight of 3,000 to 7,000, a vinyl content of 1 to 20%, and a glass transition temperature of -50 °C to -100 °C. If the molecular weight is 3,000 or less, the effect of improving wear performance is minimal. In addition, if the molecular weight exceeds 7,000, the effect of improving wet performance becomes minimal. If the liquid polybutadiene is used in less than 10 wt. parts based on 100 wt. parts of the raw material rubber, the effect to be obtained is minimal, and if it is used in more than 60 wt. parts, wet performance may be deteriorated.

The aluminum hydroxide may be formed in particles having a size of 0.15 to 1.00 micrometers. If the size thereof is less than 0.15 micrometers, improvement in wear performance is effective due to improved dispersibility, but there is a problem in that the workability is decreased. If the size thereof exceeds 1.00 micrometers, wear and tensile strength are rapidly decreased to cause a problem. In addition, if the aluminum hydroxide is used in less than 10 wt. parts, the effect to be obtained is minimal, and if it is used in more than 50 wt. parts, wear performance may be rapidly decreased.

It is preferable to limit a weight ratio of the used liquid polybutadiene to the aluminum hydroxide in a range of 1:0.25 to 1:3.0. If the ratio of the aluminum hydroxide to the liquid polybutadiene is less than 0.25 times, wear and snow performances are increased, but wet performance is decreased, and if the ratio of the used aluminum hydroxide is 3.0 times or more, wet and snow performances are improved, but wear performance is decreased.

The vulcanizing agent may be included in an amount of 0.5 to 4.0 wt. parts based on 100 wt. parts of the raw material rubber. If it is included in less than the above range, the effects of improving RR/wear performances are minimal, and if it is included in more than the above range, problems entailed in the scorch time stability may occur.

The vulcanizing agent is preferably 1,6-bis(n,n-dibenzylthiocarbamoyldithio)hexane represented by Formula 1 below, but it is not limited thereto.

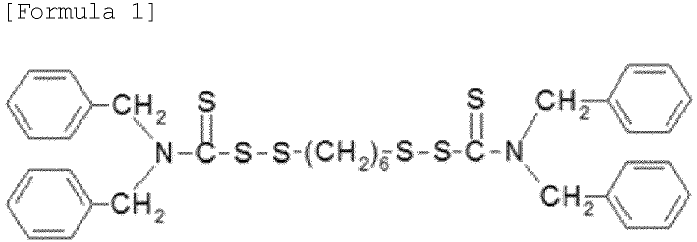

In Formula 1 above, -S-(CH2)6-S- has excellent curing properties, and its sulfur chain is relatively long compared to sulfur, such that it has flexibility/thermal stabilities without affecting physical properties, and it may simultaneously act as an accelerator by producing while decomposing.

In the tire rubber composition of the present invention, it is preferable to use carbon black particles having a specific surface area of 140 m²/g or less in terms of dispersion and wear, and may be included in an amount of 1 to 20 wt. parts based on 100 wt. parts of the raw material rubber.

The tire rubber composition of the present invention may include silica, which serves to improve physical properties of the rubber composition. The silica may include wet silica (hydrous silicic acid), dry silica (anhydrous silicic acid), calcium silicate, aluminum silicate, or colloidal silica, and specifically, may be wetted silica having the most excellent effects of improving both fracture properties and wet grip.

The silica may have a nitrogen adsorption specific surface area of 90 to 230 m²/g as measured by Brunauer-Emmett-Teller (BET), and may be included in an amount of 60 wt. parts or more and 160 wt. parts or less based on 100 wt. parts of the raw material rubber. If the amount thereof is less than the above range, it is difficult to implement braking performance, and if it exceeds the above range, problems entailed in workability (dispersion) may occur and wear performance may be greatly decreased.

In addition, the composition of the present invention may further include a vulcanizing agent and silane.

The vulcanizing agent may be sulfur powder and may be included in an amount of 1 to 3 wt. parts based on 100 wt. parts of the raw material rubber. If the vulcanizing agent is included in less than the above range, the degree of vulcanization is low and thus it is difficult to implement the desired physical properties, and if it exceeds the above range, the degree of vulcanization is too high and thus the aging properties are greatly decreased.

The silane may include bifunctional silanes such as TESPT and TESPD, and mercapto silane, etc. The silane may be included in an amount of 5 to 15 wt. parts based on 100 wt. parts of the raw material silica. When the silane is included in less than the above range, the degree of vulcanization is low and thus the physical properties are decreased, and if it exceeds the above range, the degree of vulcanization is too high and thus the aging properties are greatly decreased.

In addition, the composition may further include ingredients commonly used in the art when manufacturing tires for a vehicle, such as an accelerator.

The rubber composition of the present invention may dramatically improve wet/wear/snow performances that can be applied to tires through an optimal mixing of the liquid polybutadiene, aluminum hydroxide, and vulcanizing agent based on 100 wt. parts of the raw material rubber.

In addition, the liquid polybutadiene among the rubber composition of the present invention improves snow/wear performances, but has a disadvantage of decreasing wet performance. However, in the present invention, by including the vulcanizing agent that supplements RR and wear performances, the wet/wear/snow performances may be simultaneously improved while maintaining RR performance.

### [DETAILED DESCRIPTION OF THE INVENTION]

Hereinafter, the present invention will be described in detail through examples and experimental examples.

However, the examples and experimental examples to be described below are only intended to illustrate the present invention, and the scope of the present invention is not limited to the following examples and experimental examples.

### <Examples 1 to 4>

Butadiene rubber, natural rubber, and styrene-butadiene rubber were used as the raw material rubber. Specifically, styrene-butadiene rubber including styrene in a content of 10 to 30 wt. % and vinyl in a content of 1 to 30%, and having a glass transition temperature of -70 to -40 °C was used.

Hydrogenated hydrocarbon resin (H2/DCPD/C9 modifier) having a glass transition temperature of 50°C to 80°C and a weight average molecular weight of 600 or more and 1700 or less was used. In addition, 1,6-bis(n,n-dibenzylthiocarbamoyldithio)hexane was used as the vulcanizing agent, and Si-69([bis(3-triethoxysilyl)propyl]tetrasulfide=TESPT) was used as the silica and silane. These components were mixed, and then carbon black, sulfur, CZ (primary accelerator), and DPG (secondary accelerator) were added to the mixture according to the mixing ratio listed in Table 1 below to prepare tire tread rubber composition samples.

### <Comparative Examples 1 to 6>

Tire tread rubber composition samples were prepared by the same procedures as in the examples, except for varying the weights of the liquid polybutadiene, aluminum hydroxide and vulcanizing agent, and the mixing ratio thereof as listed in Table 1 below.

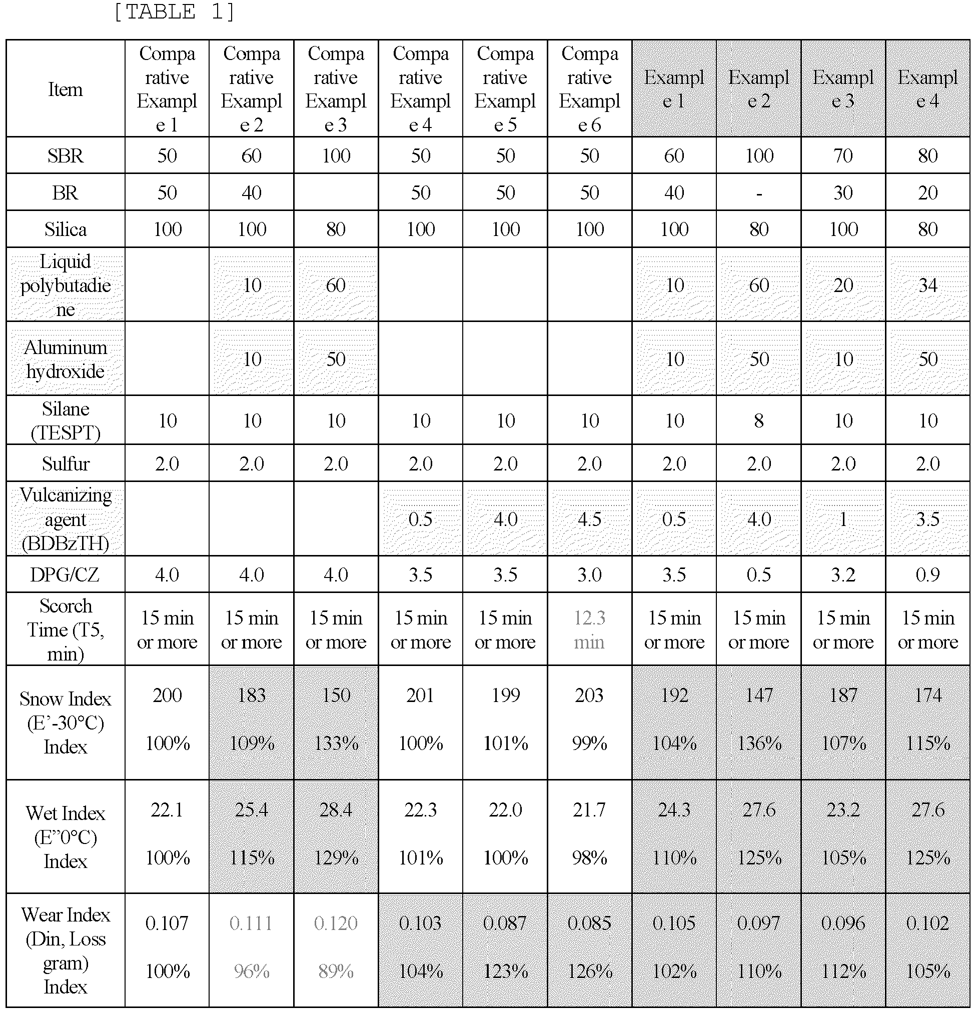

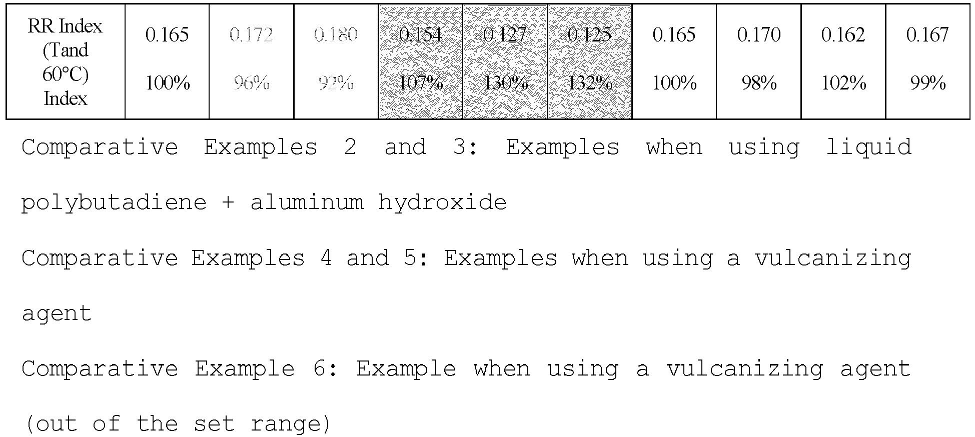

### <Experimental example> Evaluation of snow braking, braking on wet road surfaces, rolling resistance (RR) and wear resistance performances

The snow braking, braking on wet road surfaces, rolling resistance (RR) and wear resistance performances were evaluated using the samples prepared in Examples 1 to 4 and Comparative Examples 1 to 6. Each evaluation method was carried out as follows, and experimental results are shown in Table 1 above.

In Table 1 above, scorch time was evaluated using a rheometer tester, and the evaluation was performed on unvulcanized rubber at 125°C. The scorch time refers to a point at which rubber begins to be cured. If the scorch time is low, it has a significant impact on manufacturing quality and a problem entailed in tire safety may occur. Therefore, although it varies depending on the extruder to be used, the scorch time should preferably be 15 minutes or more.

The snow braking performance (snow index), wet braking performance (wet index), and RR performance were evaluated using a dynamic mechanical analysis (DMA) tester, and the evaluation was performed under Temp Sweep (-100°C to +80°C, 11 Hz) conditions. Then, evaluation results were compared with each of prediction index values.

It is advantageous for the snow braking performance that the lower the modulus value of E'-30°C, the better the rubber flows, and it is advantageous for the wet braking performance that the higher the value of E"0°C (Loss Modulus/Storage Modulus Ratio), the higher the hysteresis. It is advantageous for RR performance that the lower the value of Tan 60°C, the lower the hysteresis.

Based on these principles, as shown in Table 1 above, it can be seen that, in the samples (Comparative Examples 2 and 3) including only the liquid polybutadiene and aluminum hydroxide, the snow braking performance and wet braking performance were improved, but the wear performance and RR performance were decreased, and in the samples (Comparative Examples 4 and 5) including only the vulcanizing agent, only the wear performance and RR performance were improved.

Comparative Example 6 including the vulcanizing agent (out of the set range) exhibited improved wear performance and RR performance, but it was difficult to secure scorch time stability. In contrast, it can be seen that, when applying all the liquid polybutadiene, aluminum hydroxide, and vulcanizing agent to the samples like Examples 1 to 6, all the snow braking performance, wet braking performance, and wear performance are improved.

## Claims

1. A tire tread rubber composition comprising raw material rubber, liquid polybutadiene, aluminum hydroxide and a vulcanizing agent,
wherein the raw material rubber includes 50 to 100 parts by weight ("wt. parts") of styrene-butadiene rubber, based on a total weight of the raw material rubber,
the styrene-butadiene rubber includes styrene in a content of 10 to 30 wt. % and vinyl in a content of 1 to 30%, based on a total weight of the styrene-butadiene rubber, and
the liquid polybutadiene rubber is included in an amount of 10 to 60 wt. parts, and the aluminum hydroxide is included in an amount of 10 to 50 wt. parts, based on 100 wt. parts of the raw material rubber.

2. The tire tread rubber composition according to claim 1, wherein the vulcanizing agent is included in an amount of 0.5 to 4.0 wt. parts, based on 100 wt. parts of the raw material rubber.

3. The tire tread rubber composition according to claim 1, wherein the vulcanizing agent is 1,6-bis(n,n-dibenzylthiocarbamoyldithio)hexane represented by Formula 1 below:

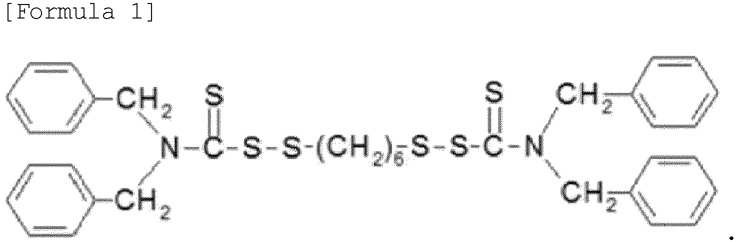

4. The tire tread rubber composition according to claim 1, wherein the aluminum hydroxide is a compound having a size of 0.15 to 1.00 micrometers and represented by formula 2 below:

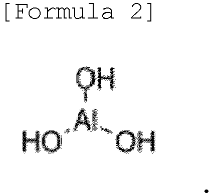

5. The tire tread rubber composition according to claim 1, wherein the liquid polybutadiene has a molecular weight of 3,000 to 7,000, a vinyl content of less than 1 to 20%, and a glass transition temperature of -50 °C to -100 °C.

6. The tire tread rubber composition according to claim 1, wherein a weight ratio of the liquid polybutadiene to the aluminum hydroxide is 1:0.25 to 1:3.0.
